# EUROPÄISCHE PATENTSCHRIFT

(11) **EP 0 620 379 B1**
(45) Veröffentlichungstag und Bekanntmachung des Hinweises auf die Patenterteilung: **01.05.1996**
(21) Anmeldenummer: 94101966.3
(22) Anmeldetag: 09.02.1994
(51) Int. Cl.: F16F 15/12

(54) **Drehschwingungsdämpfer**
Torsional vibration damper
Amortisseur de vibrations en torsion

(30) Priorität: 10.04.1993 DE 4311939
(43) Veröffentlichungstag der Anmeldung: 19.10.1994
(73) Patentinhaber: Firma Carl Freudenberg, D-69469 Weinheim (DE)
(72) Erfinder: Ochs, Winfried, Dr., D-64665 Alsbach-Hähnlein (DE); Eichhorn, Jürgen, D-69469 Weinheim (DE)

(56) Entgegenhaltungen:
- EP-A- 0 101 015
- EP-A- 0 135 646
- EP-A- 0 218 078
- EP-A- 0 218 774
- DE-A- 3 638 097
- FR-A- 718 411
- US-A- 2 723 573

## Beschreibung

Die Erfindung betrifft einen Drehschwingungsdämpfer, bei dem ein erster Trägheitsring zumindest teilweise radial außenseitig von einem Innenring angeordnet und mit diesem durch einen Zwischenring aus gummi verklebt ist.

Ein solcher Drehschwingungsdämpfer ist aus der DE-PS-36 38 097 bekannt. Der Zwischenring ist dabei in einem radialen Zwischenraum zwischen dem Trägheitsring und dem Innenring angeordnet und mit diesem nur im Bereich von einander in radialer Richtung gegenüberliegenden Flächen verklebt.

Der Erfindung liegt die Aufgabe zugrunde, einen solchen Drehschwingungsdämpfer bei Gewährleistung einer kompakten Bauweise mit einem Riemenlaufring zu versehen, der geeignet ist, während der bestimmungsgemäßen Verwendung große Verdrehamplituden unter Vermeidung nennenswerter Radialverlagerungen in sich aufzunehmen.

Diese Aufgabe wird erfindungsgemäß bei einem Drehschwingungsdämpfer der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Drehschwingungsdämpfer ist es vorgesehen, daß der Zwischenring den Trägheitsring im wesentlichen unter Vermeidung von Freiräumen und einer Haftung zusätzlich axial anliegend berührt und mit einem Riemenlaufwerk verklebt ist, der den Trägheitsring zumindest in einem Teilbereich radial außenseitig umschließt. Der Zwischenring hat in der Zwischenzone zwischen dem Riemenlaufring und dem Innenring eine größere radiale Erstreckung als in der Zwischenzone zwischen dem Trägheitsring und dem Innenring. Die Relativverdrehbarkeit des Riemenlaufringes ist hierdurch größer als diejenige des Trägheitsringes. Es ist dadurch möglich, über den Riemenlaufring eingeleitete Drehschwingungen einer großen Drehamplitude gut zu isolieren und im Bereich des Innenringes wirksame Drehschwingungen hochgradig zu dämpfen. Zusätzlich erfahren der Zwischenring und der Riemenlaufring eine gute Führung in radialer und axialer Richtung. Es können dadurch von dem Riemenlaufring große Riemenkräfte aufgenommen werden, ohne daß sich eine nennenswerte Relativverlagerung in radialer Richtung ergibt.

Nach einer vorteilhaften Ausgestaltung ist es vorgesehen, daß den Zwischenring ein zweiter Trägheitsring an dem von dem ersten Trägheitsring in axialer Richtung abgewandten Ende unter Vermeidung von Freiräumen und einer Haftung anliegend berührt, der mit dem Zwischenring nur im Bereich seines Innendurchmessers verklebt ist. Die durch den ersten Dämpfungsring bewirkte Dämpfung von Drehschwingungen wird durch die Dämpfungswirkung des zweiten Dämpfheitsringes ergänzt. Zusätzlich ergibt sich eine weiter verbesserte Führung des Riemenlaufringes und des Zwischenringes in axialer und in radialer Richtung.

Der zweite Trägheitsring kann eine von dem ersten Trägheitsring abweichende Trägheitsmasse aufweisen. Er erreicht bei einer solchen Ausbildung seine optimale Dämpfungswirkung bei einer von dem ersten Trägheitsring abweichenen Frequenz. Bedarfsweise können die Resonanzfrequenzen der beiden Trägheitsringe so eng benachbart festgelegt werden, daß sich insgesamt eine ineinander übergehende Dämpfungswirkung in einem vergleichsweise vergrößerten Frequenzbereich ergibt.

Ein ähnlicher Effekt läßt sich erzielen, wenn die Verklebungszonen des ersten und des zweiten Trägheitsringes Ringvorsprünge des Zwischenringes begrenzen, die sich durch eine voneinander abweichende Länge und/oder Breite unterscheiden.

Nach einer anderen Ausgestaltung ist es vorgesehen, daß der Innenring an dem von dem Trägheitsring in axialer Richtung abgewandten Ende mit einem radial nach außen vorstehenden Stützkragen versehen ist, der den Zwischenring unter Vermeidung einer Haftung und von Freiräumen in axialer Richtung lose anliegend berührt. Die sich ergebende radiale und axiale Führung des Riemenlaufringes und des Zwischenringes ist bei einer solchen Ausbildung ganz besonders gut.

Der Zwischenring kann die Zwischenräume zwischen dem Riemenlaufring, dem Innenring und jedem Trägheitsring vollständig ausfüllen. Sein Profil wird bei einer solchen Ausbildung auf allen Seiten durch unverformbare Maschinenteile abgestützt mit der Folge, daß die Verformbarkeit des Zwischenringes auf umfangsgerechte Deformierungen beschränkt ist. Für die Erzielung einer guten Dauerhaltbarkeit und einer guten Relativverdrehbarkeit des Riemenlaufringes in bezug auf den Innenring ist das von großem Vorteil.

Die Relativverdrehbarkeit des Riemenlaufringes läßt sich weiter vergrößern, wenn der Zwischenring ein Profil hat, das in Richtung des mittleren Bereiches einer radialen Erstreckung eine sich zunehmend verkürzende Länge in axialer Richtung hat.

Nach einer anderen Ausgestaltung ist es vogesehen, daß die lose aneinander anliegenden Berührungsflächen zwischen dem Sützkragen, dem ersten und/oder zweiten Trägheitsring und dem Zwischenring durch ein Schmiermittel geschmiert sind. Reiungsbedingter Verschleiß läßt sich hierdurch verhindern und die Gebrauchsdauer des Drehschwingungsdämpfers wesentlich verbessern. Eine Ergänzung verlorengegangenen Schmiermittels läßt sich bei solchen Ausführungen besonders einfach vornehmen, wenn der Stützkragen, der erste Dämpfungsring und/oder zweite Dämpfungsring von einer Schmieröffnung durchdrungen sind, die den mit dem Schmiermittel zu versorgenden Flächenbereich von außen zugänglich macht. Der Riemenlaufring kann im mittleren Bereich seiner axialen Erstreckung mit einem radial nach innen vorspringenden Führungsring mit einem Innendurchmesser versehen sein, der kleiner ist als der Außendurchmesser der Trägheitsringe und/oder des Stützkragens. Die axiale Führung des des Riemenlaufringes, bezogen auf den Innenring, läßt sich hierdurch weiter verbessern.

Der erfindungsgemäße Drehschwingungsdämpfer läßt sich aufgrund seines einfachen Aufbaus besonders kostengünstig erzeugen. Der enthaltene Riemenlaufring ist in ausgezeichneter Weise in radialer Richtung auf dem Nabenring abgestützt, was das Aufreten von Unwuchterscheingungen auch bei sehr hohen Drehzahlen weitestgehend ausschließt. Dennoch werden Drehschwingungen des Riemenlaufringes, die eine große Verdrehamplitude haben, in ausgezeichneter Weise von dem Innenrin isoliert.

Der Gegenstand der Erfindung wird nachfolgend anhand der Zeichnungen verdeutlicht.

Es zeigen:

Figur 1 - Eine erste Ausführung eines Drehschwingungsdämpfers in halbgeschnittener Darstelung.

Figur 2 - Den Drehschwingungsdämpfer gemäß Figur 2 in einer Ansicht von vorn.

Figur 3 - Eine zweite Ausführung des erfindungsgemäßen Drehschwingungsdämpfers.

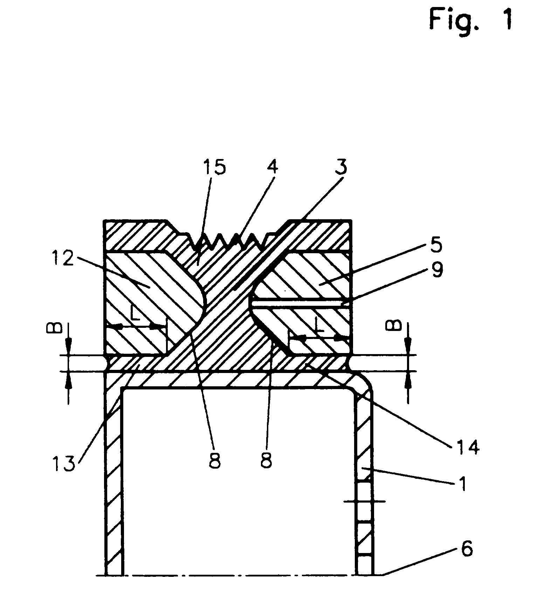

Der in Figur 1 gezeigte Drehschwingungsdämpfer besteht aus einem Nabenring 1 von topförmiger Gestalt, der aus einem metalischen Werkstoff erzeugt ist. Der Nabenring 1 ist von dem Riemenlaufring 4 umschlossen, welcher ebenfalls aus metallischem Werkstoff besteht. Der Riemenlaufring ist auf der Außenseite mit einer Laufspur für einen Feinzahnriemen versehen. Er weist desweiteren einen radial nach innen vorstehenden Führungsring 15 auf, der etwa in der Mitte seiner axialen Baulänge angeordnet ist.

Der radiale Zwischenraum zwischen dem Riemenlaufring 4 und dem Innenring wird in axialer Richtung beiderseits begrenzt durch den ersten Trägheitsring 5 und den zweiten Trägheitsring 12. Diese sind in einem Abstand von dem Riemenlaufring 4 und dem Innenring 1 angeordnet, wobei das Profil so gewählt ist, daß sich die einander gegenüberliegenden Oberflächenzonen parallel zueinander erstrecken und keine nennenswerten Abstandsänderungen aufweisen.

Der erste Trägheitsring 5 hat einen kleineren Abstand B von dem Innenring 1 als der zweite Trägheitsring 12.

Die verfügbaren Freiräume zwischen dem Riemenlaufring 4, dem Innenring 1 und den beiden Dämpfungsringen 5, 12 sind unter Bildung des Zwischenringes 3 vollständig mit elastomerem Werkstoff ausgefüllt, beispielsweise mit Gummi. Der elastomere Werkstoff ist auf adhäsive Weise an den in radialer Richtung nach innenweisenden Oberflächenzonen des Riemenlaufringes 4 festgelegt und an den in radialer Richtung nach außenweisenden Oberflächenzonen des Innenringes 1 . Die Trägheitsringe 5, 12 sind demgegenüber nur im Bereich ihres Innenumfanges mit dem Zwischenring verklebt. Die entsprechenden Zonen des Zwischenringes 3 sind mit den Bezugsziffern 13, 14 versehen sowie bis zur Längenangabe L. In den übrigen Bereichen berühren die Trägheitsringe 5, 12 den Zwischenring 3 unter vermeidung von Freiräumen und einer Haftung lose anliegend. Der Zwischenring 3 wird hierdurch in axialer Richtung geführt. Die beiden Trägheitsringe 5, 12 sind von Schmieröffnungen 9 durchdrungen, welche von außen zugänglich sind und dem Bereich der lose aneinander anliegenden Flächenzonen der Trägheitsringe und des Zwischenringes enden. In die fraglichen Zonen läßt sich hierdurch ein Schmiermittel einbringen, was das Auftreten von reibungsbedingtem Verschleiß bei einer Relativverdrehung des Zwischenringes 3 in bezug auf die Trägheitsringe 5, 12 verhindert.

Die Zwischenschicht zwischen den Trägheitsringen 5, 12 und dem Riemenlaufring 4 ist von sehr gerringer Dicke. Hierdurch wird eine metallische Berührung zwischen den Trägheitsringen und dem Riemenlaufring verhindert. Für die Entstehung und die Übertragung von Körperschall ist das von großem Vorteil.

Der Zwischenring 3 hat zwischen seinem Innen- und seinem Außendurchmesser ein in axialer Richtung symetrisch eingeschnürtes Profil. Die sich bei einer Relativverdrehung des Innenringes in bezug auf den Riemenlaufring 4 ergebenden Deformierungen des Zwischenringes 3 lassen sich dadurch hinsichtlich ihrer Größe klar vorherbestimmen, was Beschädigungen ausschließt. Die Rotationsachse des Drehschwingungsdämpfers ist mit 6 bezeichnet, die zu schmierende Zone zwischen den Trägheitsringen 5 und dem Zwischenring 3 mit 8.

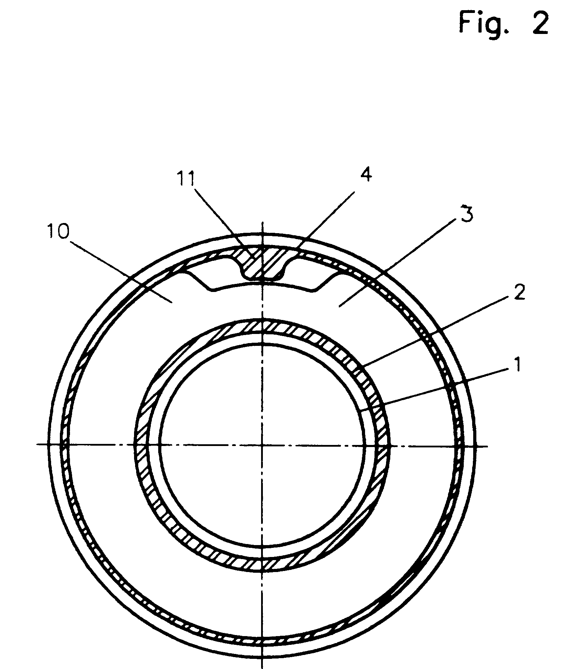

Figur 2 zeigt den Drehschwingungsdämpfer gemäß Figur 1 in einer Ansicht von vorn. Hierdurch wird erkennbar daß die Schwungringe 5, 12 mit radial nach außen vorstehenden Anschlägen 10 versehen sind, die beim Auftreten einer unzulässig hohen Verdrehamplitude mit Gegenanschlägen 11 in Eingriff bringbar sind. Überlastungsbedingten Zerstörungen des Drehschwingungsdämpfers wird hierdurch vorgebeugt.

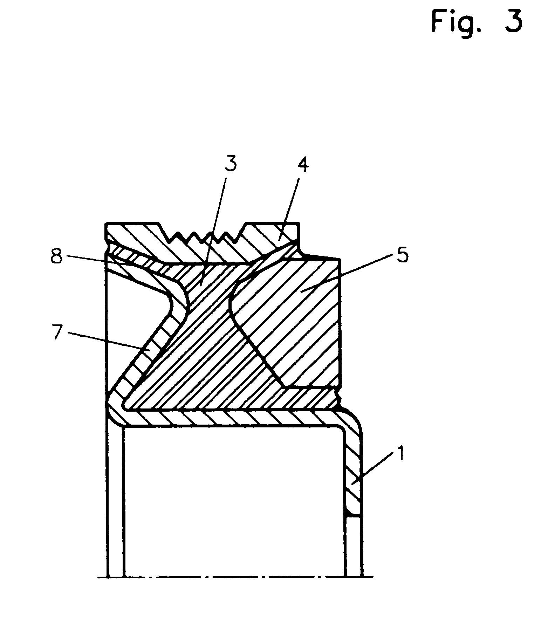

Bei dem in Figur 3 gezeigten Drehschwingungsdämpfer ist zwischen dem Außenumfang des Innenringes 1 und dem Riemenlaufring 4 lediglich ein Trägheitsring 5 vorhanden. Dieser begrenzt den radialen Zwischenraum zwischen dem Riemenlaufring 4 und dem Innenring 1 axial in einer Richtung. Auf der axial gegenüberliegenden Seite wird der Zwischenraum durch einen radial nach außen vorstehenden Stützkragen 7 des Innenringes begrenzt. Der Stützkragen 7 hat ein Profil, das die ihm gegenüberliegende Begrenzungsfläche des Trägheitsringes 5 spiegelt. In dem radialen Zwischenraum zwischen dem Riemenlaufring 4 und dem Innenring 1 ist der Zwischenring 3 angeordnet. Dieser ist im Bereich seines Innendurchmessers mit dem Innenring 1 verklebt . Desweiteren ist der Zwischenring 3 mit der gesamten, radial nach innenweisenden Seite des Riemenlaufringes 4 verklebt sowie mit dem Trägheitsring 5 im Bereich seines Innendurchmessers.

Die einander in axialer Richtung gegenüberliegenden Flächenbereichen des Stützkragen 7 und des Trägheitsringes 5 berührt der Zwischenring 3 unter Vermeidung einer Haftung und von Freiräumen lose anliegend. Der Trägheitsring 5, der Zwischenring 3 und der Riemenlaufring 4 vermögen sich hierdurch ähnlich wie bei der vorstehend beschriebenen Ausführung relativ zueinander in Umfangsrichtung zu verdrehen. Dennoch erfahren die einzelnen Teile eine gute Führung durch einander.

## Patentansprüche

1. Drehschwingungsdämpfer, bei dem ein erster Trägheitsring (5) zumindest teilweise radial außenseitig von einem Innenring angeordnet und mit diesem durch einen Zwischenring (3) aus Gummi verklebt ist, dadurch gekennzeichnet, daß der Zwischenring (3) den Trägheitsring (5) unter Vermeidung von Freiräumen und einer Haftung axial anliegend berührt, daß der Trägheitsring (5) mit dem Zwischenring (3) im wesentlichen nur im Bereich seines Innendurchmessers verklebt ist und daß mit dem Zwischenring (3) zusätzlich ein Riemenlaufring (4) verklebt ist, der den Trägheitsring (5) zumindest in einem Teilbereich radial außenseitig umschließt.

2. Drehschwingungsdämpfer nach Anspruch 1, dadurch gekennzeichnet, daß der Zwischenring (3 ) einem zweiten Trägheitsring (12) an dem von dem ersten Trägheitsring (5) in axialer Richtung abgewandten Ende im wesentlichen unter Vermeidung von Freiräumen und einer Haftung anliegend berührt und daß der zweite Trägheitsring (12) mit dem Zwischenring (3) im wesentlichen nur im Bereich seines Innendurchmessers verklebt ist.

3. Drehschwingungsdämpfer nach Anspruch 2, dadurch gekennzeichnet, daß der zweite Trägheitsring (12) eine von dem ersten Trägheitsring (5) abweichende Trägheitsmasse aufweist.

4. Drehschwingungsdämpfer nach Anspruch 2 bis 3, dadurch gekennzeichnet, daß die Verklebungszonen des ersten und des zweiten Trägheitsringes (5, 12) Ringvorsprünge (13, 14) des Zwischenringes (3) begrenzen, die sich durch eine voneinander abweichende Länge L und/oder Breite B unterscheiden.

5. Drehschwingungsdämpfer nach Anspruch 1, dadurch gekennzeichnet, daß der Innenring (1) an dem von dem Tragneitsring (5) in axialer Richtung abgewandten Ende mit einem radial nach außen vorstehenden Stützkragen (7) versehen ist, der den Zwischenring (3) im wesentlichen unter Vermeidung von Freiräumen und einer Haftung lose anliegend berührt.

6. Drehschwingungsdämpfer nach Anspruch 1 bis 5, dadurch gekennzeichnet, daß der Zwischenring (3) den radialen Zwischenraum zwischen dem Innenring (1) und dem Riemenlaufring (4) im wesentlichen vollständig ausfüllt.

7. Drehschwingungsdämpfer nach Anspruch 6, dadurch gekennzeichnet, daß der Zwischenring (3) ein Profil hat, das in Richtung des mittleren Bereichs seiner radialen Erstreckung eine sich zunehmend verküzende Länge in axialer Richtung hat.

8. Drehschwingungsdämpfer nach Ansprurch 1 bis 7, dadurch gekennzeichnet, daß diejenigen Bereiche, in denen der Zwischenring (3) die Trägheitsringe (5, 12) und/oder den Stützkragen (7) unter Vermeindung einer Haftung anliegend berührt, durch ein Schmiermittel benetzbar sind.

9. Drehschwingungsdämpfer nach Anspruch 8, dadurch gekennzeichent, daß der Stützkragen (7) und/oder die Trägheitsringe (5, 12) von einer Schmieröffnung durchdrungen sind.

10. Drehschwingungsdämpfer nach Anspruch 1 bis 9, dadurch gekennzeichnet, daß der Riemenlaufring (4) von einem Trägheitsring (5, 12) und/oder dem Stützkragen durch eine filmartig ausgebildete Gummischicht getrennt ist, die einen einstückigen Bestandteil des Zwischenringes (3) bildet.

11. Drehschwingungsdämpfer nach Anspruch 1 bis 10, dadurch gekennzeichnet, daß der Riemenlaufring etwa im mittleren Bereich seiner axialen Erstreckung mit einem radial nach innen vorspringenden Führungsring (15) versehen ist mit einem Innendurchmesser, der kleiner ist als der Außendurchmesser eines jeden Trägheitsringes (5, 12) und/oder des Stützkragens (7).

## Claims

1. A torsional vibration damper in which a first inertia ring (5) is arranged at least in part radially to the outside of an inner ring and is adhesively bonded to the latter by means of an intermediate ring (3) made of rubber, characterized in that the intermediate ring (3) touches the inertia ring (5), resting against it axially in a manner which avoids free spaces and sticking, in that the inertia ring (5) is adhesively bonded to the intermediate ring (3) essentially only in the region of its inside diameter, and in that the intermediate ring (3) additionally has adhesively bonded to it a belt contact ring (4) which surrounds the inertia ring (5) radially to the outside, at least in a partial area.

2. A torsional vibration damper according to claim 1, characterized in that the intermediate ring (3) touches a second inertia ring (12), resting against it in a manner which substantially avoids free spaces and sticking, at the end remote in the axial direction from the first inertia ring (5), and in that the second inertia ring (12) is adhesively bonded to the intermediate ring (3) essentially only in the region of its inside diameter.

3. A torsional vibration damper according to claim 3, characterized in that the second inertia ring (12) has a different inertial mass from the first inertia ring (5).

4. A torsional vibration damper according to either of claims 2 and 3, characterized in that the adhesively bound zones of the first and of the second inertia ring (5, 12) bound annular projections (13, 14) of the intermediate ring (3) which differ in their length L and/or width B.

5. A torsional vibration damper according to claim 1, characterised in that the inner ring (1) is provided at the end remote in the axial direction from the inertia ring (5) with a supporting collar (7) which projects outwards radially and touches the intermediate ring (3), resting loosely against it in a manner which essentially avoids free spaces and sticking.

6. A torsional vibration damper according to any of claims 1 to 5, characterized in that the intermediate ring (3) fills the radial interspace between the inner ring (1) and the belt contact ring (4) essentially completely.

7. A torsional vibration damper according to claim 6, characterized in that the intermediate ring (3) has a profile which has a progressively shorter length in the axial direction towards the central region of its radial extent.

8. A torsional vibration damper according to any of claims 1 to 7, characterized in that those areas in which the intermediate ring (3) touches the inertia rings (5, 12) and/or the supporting collar (7) and rests against them/it in a manner which avoids sticking can be wetted by a lubricant.

9. A torsional vibration damper according to claim 8, characterized in that the supporting collar (7) and/or the inertia rings (5, 12) are penetrated by a lubrication opening.

10. A torsional vibration damper according to any of claims 1 to 9, characterized in that the belt contact ring (4) is separated from an inertia ring (5, 12) and/or the supporting collar by a rubber layer of film-like configuration which forms an integral part of the intermediate ring (3).

11. A torsional vibration damper according to any of claims 1 to 11, characterized in that the belt contact ring is provided approximately in the central region of its axial extent with a guide ring (15) which projects radially inwards and has an inside diameter which is smaller than the outside diameter of each inertia ring (5, 12) and/or the supporting collar (7).

## Revendications

1. Amortisseur de vibrations en torsion, dans lequel une première bague d'inertie (5) est disposée au moins partiellement suivant le sens radial sur la face externe d'une bague intérieure et est collée sur celle-ci par une bague intermédiaire (3) en caoutchouc, caractérisé en ce que la bague intermédiaire (3) touche la bague d'inertie (5) axialement, en évitant des espaces libres et une adhérence, en ce que la bague d'inertie (5) n'est collée sur la bague intermédiaire (3) qu'essentiellement au niveau de son diamètre intérieur et en ce qu'une bague de roulement à courroie (4) est collée en plus sur la bague intermédiaire (3), qui enveloppe la face externe de la bague d'inertie (5) radialement au moins dans une zone partielle.

2. Amortisseur de vibrations en torsion selon la revendication 1, caractérisé en ce que la bague intermédiaire (3) touche une deuxième bague d'inertie (12) à l'extrémité détournée de la première bague d'inertie (5) dans le sens axial, essentiellement en évitant des espaces libres et une adhérence et en ce que la deuxième bague d'inertie (12) n'est collée sur la bague intermédiaire (3) qu'essentiellement au niveau de son diamètre intérieur.

3. Amortisseur de vibrations en torsion selon la revendication 2, caractérisé en ce que la deuxième bague d'inertie (12) a une masse d'inertie différente de celle de la première bague d'inertie (5).

4. Amortisseur de vibrations en torsion selon l'une des revendication 2 à 3, caractérisé en ce que les zones de collage de la première et de la deuxième bague d'inertie (5, 12) limitent des saillies annulaires (13, 14) de la bague intermédiaire (3), qui diffèrent par des longueurs L différentes l'une de l'autre et/ou des largeurs B différentes l'une de l'autre.

5. Amortisseur de vibrations en torsion selon la revendication 1, caractérisé en ce que la bague intérieure (1) est munie à l'extrémité détournée de la bague d'inertie (5) dans le sens axial d'une collerette d'appui (7) faisant saillie radialement vers l'extérieur, qui touche la bague intermédiaire (3) librement, essentiellement en évitant des espaces libres et une adhérence.

6. Amortisseur de vibrations en torsion selon l'une des revendications 1 à 5, caractérisé en ce que la bague intermédiaire (3) remplit essentiellement tout l'espace libre radial entre la bague intérieure (1) et la bague de roulement à courroie (4).

7. Amortisseur de vibrations en torsion selon la revendication 6, caractérisé en ce que la bague intermédiaire (3) a un profil qui présente dans le sens de la partie centrale de son extension radiale une longueur diminuant progressivement dans le sens axial.

8. Amortisseur de vibrations en torsion selon l'une des revendications 1 à 7, caractérisé en ce que les zones, dans lesquelles la bague intermédiaire (3) touche les bagues d'inertie (5, 12) et/ou la collerette (7), en évitant une adhérence, peuvent être imprégnées d'un lubrifiant.

9. Amortisseur de vibrations en torsion selon la revendication 8, caractérisé en ce qu'une ouverture de lubrification est ménagée à travers la collerette (7) et/ou les bagues d'inertie (5, 12).

10. Amortisseur de vibrations en torsion selon l'une des revendications 1 à 9, caractérisé en ce que la bague de roulement à courroie (4) est séparée d'une bague d'inertie (5, 12) et/ou de la collerette par une couche en caoutchouc réalisée à la manière d'un film, qui constitue une composante monopièce de la bague intermédiaire (3).

11. Amortisseur de vibrations en torsion selon l'une des revendications 1 à 10, caractérisé en ce que la bague de roulement à courroie est munie sensiblement dans la partie centrale de son extension axiale d'une bague de guidage (15) faisant saillie radialement vers l'intérieur, qui est plus petite que le diamètre extérieur de chacune des bagues d'inertie (5, 12) et/ou de la collerette (7).
